# EUROPÄISCHE PATENTSCHRIFT

(11) **EP 3 487 718 B1**
(45) Veröffentlichungstag und Bekanntmachung des Hinweises auf die Patenterteilung: **13.01.2021**
(21) Anmeldenummer: 17730763.4
(22) Anmeldetag: 13.06.2017
(51) Int. Cl.: B60G 11/56, B60G 17/027, F16F 9/56, F16F 13/00, F16F 9/04, F16F 9/06, B62K 25/04, B60G 17/04

(54) **FEDER- UND DÄMPFUNGSANORDNUNG FÜR EIN MOTORRAD**
SPRING- AND DAMPING ARRANGEMENT FOR A MOTORCYCLE
SYSTÈME DE RESSORT ET D'AMORTISSEMENT DESTINÉ À UNE MOTOCYCLETTE

(30) Priorität: 22.07.2016 DE 102016213429
(43) Veröffentlichungstag der Anmeldung: 29.05.2019
(73) Patentinhaber: Bayerische Motoren Werke Aktiengesellschaft, 80809 München (DE)
(72) Erfinder: SCHATZBERGER, Uwe, 84172 Buch (DE)
(86) Internationale Anmeldenummer: PCT/EP2017/064346
(87) Internationale Veröffentlichungsnummer: WO 2018/015069

(56) Entgegenhaltungen:
- EP-A1- 0 444 278
- WO-A1-2014/057334
- DE-A1- 19 701 605
- DE-A1-102004 032 083
- DE-A1-102007 056 700
- DE-A1-102009 045 051
- JP-A- S5 979 320

## Beschreibung

Die Erfindung betrifft eine Feder- und Dämpfungsanordnung zum Einstellen der Federrate und der Fahrlage eines Motorrads sowie ein Motorrad, das mit einer solchen Anordnung ausgestattet ist. Ein Beispiel für eine solche Feder- und Dämpfungsanordnung, die eine Serienschaltung umfasst, die in einer Folge aus einer Schraubenfeder, einem hydraulischen Aktuator und einer Luftfedereinheit gebildet ist, ist aus der WO 2014/057334 A1 bekannt.

Einstellvorrichtungen zum Verändern der Federungseigenschaften des Federungssystems eines Motorrades sind in unterschiedlichen Ausgestaltungen bereits aus dem Stand der Technik bekannt. Hierbei nehmen dafür innerhalb des Federungssystems vorgesehene Einstellvorrichtungen in der Regel Einfluss auf die Dämpfungseigenschaften des Dämpferelements, um eine weiche, komfortable oder harte, sportliche Dämpfung zu erzeugen.

Nachteilig ist dabei, dass eine Niveauregulierung oder variabel einstellbare Fahrlage innerhalb einstellbarer Grenzen mit denen auf die Dämpferelemente wirkenden Einstellsystemen nicht realisierbar ist.

Aus der EP 1734277 B1 ist ein bekanntes System, das sogenannte D-ESA System (Dynamic Electronic Suspension Adjustment) bekannt. Dabei kann das Fahrwerk über die Federungs- und Dämpfereigenschaften elektronisch eingestellt werden. Dies geschieht per Knopfdruck durch den Bediener, wobei die Beladung gewählt werden kann, d.h. ob man alleine, alleine mit Gepäck oder zum Beispiel mit einem Sozius unterwegs ist. Die Dämpfungsrate wird mittels Proportionalventil am Dämpfer verändert.

Im Stand der Technik wird die Federratenverstellung über den Einsatz eines Elastomer-Ringes realisiert. Dieser sitzt außerhalb der Schraubfeder und ist gemäß der Druckschrift DE10 2009 053 232 A1 mechanisch in Reihe geschaltet. Auf den Elastomerring wirkt hierbei ein Stellglied, welches zwei an der Mantelfläche verschiebbare Flüssigkeitskammern bildet. Der Befüllungsgrad der einen Kammer verändert dabei die Federbasis, der Befüllungsgrad der anderen Kammer steuert die Federrate über die Spaltgrößenänderung und somit den zur Verfügung stehende Platz des Elastomerrings.

Die DE 102007007630 A1 beschreibt den beschriebenen Wirkmechanismus, in einer anderer konstruktiver Umsetzung. Dabei wird die Änderung der Federrate über eine Spiralfeder und eine seriell zugeschaltete Elastomerfedereinrichtung erzeugt. Die Einrichtung setzt sich zusammen aus Elastomerelement und zugeordneter Sperreinrichtung. Dabei können mehrere Einrichtungen seriell hintereinander geschalten werden. Die Sperreinrichtung soll dabei die Kompression des Elastomerelementes entweder sperren oder zulassen. Die Federrate des Federbeins ist somit durch die Federrate der Spiralfeder und der nicht gesperrten Elastomerelemente festgelegt.

Aus der DE 10 2007 015 888 A1 ist eine weitere Lösung zur Einstellung der Federrate bekannt. Hierbei wird eine Zusatzfeder, welche in Reihe zu der Hauptfeder geschaltet ist, benötigt. Zudem wird ein Schieber verwendet, welcher bei Erreichen des vorbestimmten Einfederweges der Zusatzfeder, den Anschlag der Zusatzfeder hält und so ein weiteres Einfedern der Zusatzfeder unterbindet.

Aus den Druckschriften EP 1734277 B1, DE 3343007 C2 und DE 10 2014 200 118 A1 sind weitere Lösungen zur Einstellung der Federrate einer Feder eines Motorrades bekannt.

Nachteilig bei den genannten Lösungen ist der Umstand, dass die Fahrlage einerseits bei konstanter sowie andererseits unterschiedlicher Beladung nicht variabel einstellbar ist.

Wünschenswert ist es eine Lösung vorzusehen mit der insbesondere die folgenden Zustände realisierbar sind. Bei konstanter Beladung sollte ein kontinuierliches Absenken oder Anheben der Fahrlage, unter Beibehaltung der Federrate, möglich sein. Die Regelung der Fahrlage sollte daher in Abhängigkeit von der Beladung erfolgen. Dies sollte unter der Prämisse erfolgen, keine zusätzlichen Aggregate oder Aktuatoren als Einstellmittel vorsehen zu müssen. So ist es z. B. nicht gewünscht einen Kompressor zur Erzeugung von Druckluft im Motorrad aus Platz- und Gewichtsgründen vorzusehen.

Ausgehend vom Stand der Technik ist es daher eine Aufgabe der vorliegenden Erfindung, vorgenannte Nachteile zu überwinden und eine universelle, kostengünstige Lösung zum Einstellen der Federrate und der Fahrlage eines Motorrads bereit zu stellen.

Diese Aufgabe wird mit einer Vorrichtung mit den Merkmalen des Anspruchs 1, sowie mit den Merkmalen des Anspruchs 6 gelöst.

Ein Grundgedanke der vorliegenden Erfindung ist es, die vorhandene Hydraulik, wie z. B. die Ölhydraulik in einem Motorrad dahingehend zu nutzen, dass ein hydraulisches Stellglied mit einer Luftfeder und einer vorzugsweise Schraubenfeder in Serie angeordnet und drucktechnisch gekoppelt wird, indem durch eine Erhöhung der Beladung das Luftvolumen der Luftfeder beeinflusst wird, dass sich einerseits die Federcharakteristik, sprich die Federrate ändert und sich andererseits abhängig vom Beldaungszustand ein gewünschter Fahrniveauzustand durch Anpassen mittels des hydraulischen Stellgliedes ergibt bzw. einstellen lässt.

Erfindungsgemäß wird daher eine Feder- und Dämpfungsanordnung zum Einstellen der Federrate und der Fahrlage eines Motorrads vorgeschlagen, umfassend eine Serienschaltung in der Reihenfolge gebildet aus wenigstens einer Schraubenfeder, einer Luftfedereinheit und einem hydraulischen Stellglied. Die Federrate stellt sich daher in Abhängigkeit von der Beladung ein. Die Federratenverstellung geschieht mit Vorteil in Form einer automatischen Selbstanpassung bei einer Beladungsänderung.

Die erfindungsgemäße Vorrichtung weist mit Vorteil ein Mittel auf, mit dem die hydraulische Beladung des hydraulischen Stellglied manuell oder gemäß einer Systemeinstellung verändert werden kann und sich das Luftvolumen der Luftfedereinheit verändern lässt. Das hydraulische Stellglied kann dabei als ein sogenannter Preload-Adjuster ausgebildet sein. Im Folgenden wird allgemein von hydraulischem Stellglieg gesprochen, wobei vorzugsweise eine betreffend der hydraulichen Beladung veränderbare Hydraulikeinheit verwendet wird, die mit mehr oder weniger Hydraulikflüssigkeit befüllt werden kann, um die wirksame Federbeinlänge abhängig von der Federrate bei einem bestimmten Beladungszustand zu verändern.

In einer bevorzugten Ausführung der Erfindung ist ferner vorgesehen, dass zwischen der Luftfedereinheit und dem hydraulischen Stellglied ein beweglicher Trennkolben angeordnet ist, mit dessen relativer Kolbenposition sich das Luftvolumen der Luftfedereinheit verändert. Das hydraulischen Stellglied kann dabei direkt über eine Hydraulikleitung mit der Hydraulik und damit der Hydraulikflüssigkeit des Mototrrads beaufschlagt werden. Alternativ kann z. B. auch ein Gas-Bag als Realisierungsform der Luftfeder vorgesehen werden. Vereinfacht handelt es sich hierbei um mehrlagige hochdichte Kunststoffbeutel die mit Gas gefüllt werden. Gegen diese Bags stützt sich die Hydraulik ab.

Erfindungsgemäß ist es dadurch möglich die folgenden Bedingungen zu realisieren. Wird das hydraulischen Stellglied bei konstanter Beladung rückgestellt (entspannt) verschiebt sich die Abstützbasis der auftretenden Federkräfte, wodurch ein kontinuierliches Absenken der Fahrlage, unter Beibehaltung der Federrate, erreicht wird. Wird die Beladung des Fahrzeuges bzw. Motorrads erhöht, muss das hydraulischen Stellglied vorgespannt werden, d. h. weiter hydraulisch Beladen werden, so dass die Federrate steigt und die gewünschte Fahrlage erhalten bleibt. Wird die Beladung hingegen reduziert, ausgehend von einer zuvor schwereren Beladung, muss das hydraulischen Stellglied entspannt werden, die Federrate sinkt ab, wodurch die gewünschte Fahrlage beibehalten wird.

Die Federrate der Luftfedereinheit kann z. B. bei konstanter Beladung durch eine Druckanpassung über einen Anschlussstutzen, Befüllstutzen oder Servicezugang der Luftfeder variiert werden. Ein entsprechend in der Steuerung implementierter Niveauregelalgorithmus sorgt über einen elektrifizierten Preload-Adjuster für den Erhalt der gewünschten Fahrlage bei geänderter Federrate. Die Beeinflussung des Drucks der Luftfeder kann z. B. über eine mechanische oder elektrische Pumpe erfolgen. Anders ausgedrückt bedeutet dies, dass die Luftfedereinheit mit Vorteil einen Anschlussstutzen für Luft oder ein anderes gasförmiges Medium aufweist, um den statischen Fülldruck und damit die Federrate der Luftfedereineit durch Zu- oder Ablassen der Luft bzw. des gasförmigen Mediums zu verändern.

Mit Vorteil ist die Feder- und Dämpfungsanordnung so ausgebildet, dass die hydraulische Beladung des hydraulischen Stellglieds mittels einer mechanischen oder elektromechanischen Einstellvorrichtung erfolgt.

Ein weiterer Aspekt der vorliegenden Erfindung betrifft ein Motorrad oder motorbetriebenes Zweirad umfassend eine wie zuvor beschriebene Feder- und Dämpfungsanordnung.

In einer besonders vorteilhaften Ausführungsform der Erfindung ist ferner vorgesehen, dass eine von einem Benutzer bedienbare Niveauregelung des Fahrwerks im Motorrad vorgesehen ist, mit der abhängig vom Beladezustand des Motorrads die hydraulische Beladung des hydraulischen Stellglieds und damit die Federrate der Luftfedereinheit so eingestellt werden kann, dass sich ein gewünschtes Fahrwerksniveau einstellen lässt.

In einer weiteren bevorzugten Ausführung der Erfindung weist die Vorrichtung ferner eine Druck-Sensorik und eine mit der Druck-Sensorik verbundene Druckanzeige auf, mit der die hydraulische Beladung und/oder der sich durch die jeweilige Beladung und dynamische Fahrsituation des Motorrads einstellende Druck in der Luftfedereinheit angezeigt wird oder anzeigbar ist. So kann auf unerwünschte Fahrwerkzustände unmittelbar reagiert werden. Bei z.B. zu niedrigem Luftdruck in der Luftfedereinheit, kann mittels einer mitgeführten Handpumpe der Druck erhöht werden und an der Anzeige kontrolliert werden.

Ergänzend kann auch vorgesehen sein, dass zur Einstellung des Schwingverhaltens der Feder- und Dämpfungsanordnung ferner ein elektrischer Verstelldämpfer vorgesehen ist.

In einer bevorzugten Ausführung des erfindungsgemäßen Verfahrens ist vorgesehen, dass ferner ein Anschlag oder eine Zuganschlagfeder mit der Luftfedereinheit verbunden ist, um den Federwege und/oder die Ausschubkraft der Luftfedereinheit bei Bremsmanövern zu begrenzen, so dass trotz variabel und komfortabel einstellbarer Fahrtlage auch besonderen Fahrsituationen Rechnung getragen wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: ein erstes Ausführungsbeispiel einer erfindungsgemäßen Federund Dämpfungsanordnung für ein Motorrad und
- Fig.2: ein zweites Ausführungsbeispiel einer erfindungsgemäßen Federund Dämpfungsanordnung für ein Motorrad.

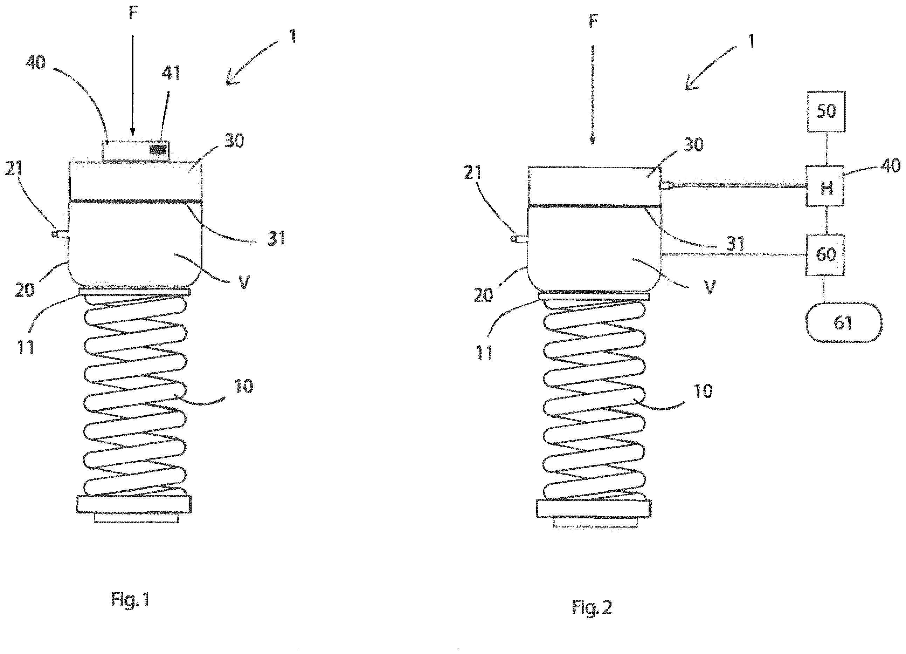

Die Erfindung wird in den folgenden Abschnitten anhand beispielhafter und schematisierter Ausführungsformen mit Bezug auf die Figuren 1 und 2 näher beschrieben. Gleiche Bezugszeichen in den Figuren weisen auf gleiche und/oder gleichartige funktionale oder strukturelle Merkmale hin.

Die Figur 1 zeigt ein erstes Ausführungsbeispiel einer Feder- und Dämpfungsanordnung 1 zum Einstellen der Federrate und der Fahrlage eines Motorrads, umfassend eine Serienschaltung aus einer Schraubenfeder 10, einer Luftfedereinheit 20, die direkt mit der Schraubenfeder 10 mechansich gekopplet ist und einem hydraulischen Stellglied 30, welches als hydraulischer Preload-Adjuster ausgebildet ist und sich oberhalb der Luftfeder befindet und keinen direkten Kontakt zur Stahlfeder aufweist.

Die Funktion des hydraulischer Preload-Adjusters 30 liegt in der gezielten Veränderung der wirksamen Federarmlänge während sich die Federrate der Luftfedereinheit 20 bei veränderter Beladung derart verändert, dass sich in Abhängigkeit einer der durch die Beladung einwirkenden Kraft F, z .B. durch das auf die Feder- und Dämpfungsanordnung 1 wirkende Gewicht des Motorrads und der Beladung, dass sich eine definierte Fahrlage einstellen lässt.

Verändert man über den hydraulischen Preload-Adjusters 30 durch Druckaufbringung das Volumen der Luftfeder, wird sich deren Ausschubkraft entsprechend erhöhen. Bei konstanter Beladung würde das einen Fahrlagenverlust bedeuten. Das Einwirken des Preload-Adjusters 30 auf die Serienschaltung der Luft- Stahlfeder ist der Beladungsänderung zeitlich nachgeschaltet. Befindet sich das System für einen definierten Beladungszustand in einer gewünschten Fahrlagenposition, so wird bei einer Erhöhung der Beladung, durch die erhöhte Kraft auf die Serienschaltung der Federn, die gewünschte Fahrlage unterschritten. Die äußere Kraft wirkt dabei auf jede Einzelfeder der Serienschaltung. Für die Luftfeder bedeutet dies eine Reduktion ihres Volumens, was mit einer Anhebung ihrer Federrate im Zusammenhang steht. Zur Wiederherstellung der gewünschten Fahrlage muss nun der Preload-Adjuster 30 so angesteuert werden, dass durch Einbringung einer Hydraulikflüssigkeit, wie z. B. dem Hydrauliköl die ursprüngliche Fahrlage wieder hergestellt wird. Durch das Einwirken des Preload-Adjusters 30 kommt es jedoch nicht zu einer Veränderung der Federrate.

Ferner ist in den beiden Ausführungsformden der Figuren 1 und 2 jeweils ein Mittel 40 vorgesehen, mit dem die hydraulische Beladung des hydraulischen Stellglied 30 bzw. des Preload-Adjuster verändert werden kann, wodurch sich das Luftvolumen der Luftfedereinheit 20, wie zuvor beschrieben, einstellen lässt. Bei der Ausführung gemäß der Figur 1 ist dieses Mittel als eine elektromechanische Einstellvorrichtung 41 ausgebildet, während bei der Ausführung gemäß der Figur 2 eine motorradseitige Hydraulik vorgesehen ist, mit der sich die Beladung mit Hydraulikflüssigkeit in dem Preload-Adjuster 30 verändern lässt.

Hierdurch kann ein beweglicher Trennkolben 31, der zwischen der Luftfedereinheit 20 und dem hydraulischen Stellglied angeordnet ist, betätigt werden.

Ferner ist in den Figuren 1 und 2 ersichtlich, dass die Luftfedereinheit 20 einen seitlich zugäglichen Anschlussstutzen 21 für Luft oder ein gasförmiges Medium aufweist, um den statischen Fülldruck und damit die Federrate der Luftfedereineit 20 durch Zu- oder Ablassen der Luft bzw. des gasförmigen Mediums zu verändern. Dieser Anschlussstutzen 21 kann ferner als Servicezugang für Wartungsarbeiten dienen.

Die Kopplung der Luftfedereinheit 20, die als Luftfederbalg oder Blase ausgebildet sein kann, ist mit der Schraubenfeder 10 über einen Federteller 11 mechanisch gekopplet, so dass eine Serienschaltung der Federn gebildet wird.

Lediglich schematisch angedeutet findet sich in der Figur 2 eine Niveauregelung 50 für das Fahrwerks eines Motorrads, mit der abhängig vom Beladezustand des Motorrads d.h. der auf die Feder- und Dämpfungsanordnung 1 einwirkende Kraft F, die hydraulische Beladung des hydraulischen Stellglieds 30 und die Federrate der Luftfedereinheit 20 so eingestellt werden kann, dass sich ein gewünschtes Fahrwerksniveau einstellen lässt.

Ebenfalls schematisch dargetsellt ist eine Druck-Sensorik 60 und eine mit der Druck-Sensorik 60 verbundene Druckanzeige 61, mit der die hydraulische Beladung und/oder der sich durch die jeweilige Beladung und dynamische Fahrsituation des Motorrads einstellende Druck in der Luftfedereinheit 20 angezeigt wird oder anzeigbar ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So kann die Erfindungsgemäße Anordnung auf die Gabel eines Motorrades oder Kraftrades montiert werden oder die Vorderradführung eines Motorrads damit ausgestattet werden, um die zuvor erwähnten Vorteile bei einem Motorrad zu erzielen.

## Patentansprüche

1. Feder- und Dämpfungsanordnung (1) zum Einstellen der Federrate und der Fahrlage eines Motorrads, umfassend eine Serienschaltung in der Reihenfolge gebildet aus wenigstens einer Schraubenfeder (10), einer Luftfedereinheit (20) und einem hydraulischen Stellglied (30), wobei sich in Abhängigkeit einer von außen einwirkenden Kraft F auf die Feder- und Dämpfungsanordnung (1) die Federrate der Luftfedereinheit verändert, wobei die daraus resultierende Fahrlagenveränderung mittels der hydraulischen Beladung des hydraulischen Stellglieds (30) kompensiert wird und sich dadurch eine definierte Fahrlage einstellen lässt oder erhalten bleibt.

2. Feder- und Dämpfungsanordnung (1) für ein Motorrad gemäß Anspruch 1, **dadurch gekennzeichnet, dass** ein Mittel (40) vorgesehen ist, mit dem die hydraulische Beladung des hydraulischen Stellglied (30) verändert werden kann.

3. Feder- und Dämpfungsanordnung (1) gemäß Anspruch 1 oder 2, **dadurch gekennzeichnet, dass** zwischen der Luftfedereinheit (20) und dem hydraulischen Stellglied (30) ein beweglicher Trennkolben (31) angeordnet ist, mit dessen relativer Kolbenposition sich das Luftvolumen der Luftfedereinheit (20) einstellen lässt.

4. Feder- und Dämpfungsanordnung (1) gemäß einem der vorhergehenden Ansprüche, **dadurch gekennzeichnet, dass** das die hydraulische Beladung des des hydraulischen Stellglieds (30) mittels einer mechanischen oder elektromechanischen Einstellvorrichtung (41) erfolgt.

5. Feder- und Dämpfungsanordnung (1) gemäß einem der vorhergehenden Ansprüche, **dadurch gekennzeichnet, dass** die Luftfedereinheit (20) einen Anschlussstutzen (21) für Luft oder ein gasförmiges Medium aufweist, um den statischen Fülldruck und damit die Federrate der Luftfedereineit durch Zu- oder Ablassen der Luft bzw. des gasförmigen Mediums zu verändern.

6. Motorrad oder motorbetriebenes Zweirad umfassend eine Feder- und Dämpfungsanordnung (1) gemäß einem der vorhergehenden Ansprüche 1 bis 5.

7. Motorrad oder motorbetriebenes Zweirad gemäß Anspruch 6, **dadurch gekennzeichnet, dass** eine von einem Benutzer bedienbare Niveauregelung (50) des Fahrwerks vorgesehen ist, mit der abhängig vom Beladezustand des Motorrads die hydraulische Beladung des des hydraulischen Stellglieds (30) so eingestellt werden kann, dass sich ein gewünschtes Fahrwerksniveau bzw. eine gewünschte Fahrlage einstellen lässt.

8. Motorrad oder motorbetriebenes Zweirad gemäß Anspruch 6 oder 7, **dadurch gekennzeichnet, dass** ferner eine Druck-Sensorik (60) und eine mit der Druck-Sensorik (60) verbundene Druckanzeige (61) vorgesehen ist, mit der die hydraulische Beladung und/oder der sich durch die jeweilige Beladung und dynamische Fahrsituation des Motorrads einstellende Druck in der Luftfedereinheit (20) angezeigt wird oder anzeigbar ist.

9. Motorrad oder motorbetriebenes Zweirad gemäß Anspruch 6, 7 oder 8, **dadurch gekennzeichnet, dass** zur Einstellung des Schwingverhaltens der Feder- und Dämpfungsanordnung (1) ferner ein elektrischer Verstelldämpfer vorgesehen ist.

10. Motorrad oder motorbetriebenes Zweirad gemäß einem der Ansprüche 6 bis 9, **dadurch gekennzeichnet, dass** ferner ein Anschlag oder eine Zuganschlagfeder mit der Luftfedereinheit (20) verbunden ist, um den Federwege und/oder die Ausschubkraft der Luftfedereinheit (20) bei Bremsmanövern zu begrenzen.

## Claims

1. Spring and damping arrangement (1) for setting the spring rate and the riding position of a motorcycle, comprising a series circuit in the sequence formed from at least one coil spring (10), an air spring unit (20) and a hydraulic actuator (30), the spring rate of the air spring unit changing in a manner which is dependent on a force F which acts from the outside on the spring and damping arrangement (1), the resulting riding position change being compensated for by means of the hydraulic loading of the hydraulic actuator (30), and, as a result, a defined riding position being capable of being set or being maintained.

2. Spring and damping arrangement (1) for a motorcycle according to Claim 1, **characterized in that** a means (40) is provided, by means of which the hydraulic loading of the hydraulic actuator (30) can be changed.

3. Spring and damping arrangement (1) according to Claim 1 or 2, **characterized in that** a movable separating piston (31) is arranged between the air spring unit (20) and the hydraulic actuator (30), by way of the relative piston position of which separating piston (31) the air volume of the air spring unit (20) can be set.

4. Spring and damping arrangement (1) according to one of the preceding claims, **characterized in that** the hydraulic loading of the hydraulic actuator (30) takes place by means of a mechanical or electromechanical setting apparatus (41).

5. Spring and damping arrangement (1) according to one of the preceding claims, **characterized in that** the air spring unit (20) has a connector stub (21) for air or a gaseous medium, in order to change the static filling pressure and therefore the spring rate of the air spring unit by way of feeding in or discharging the air or the gaseous medium.

6. Motorcycle or motor-operated bicycle comprising a spring and damping arrangement (1) according to one of the preceding Claims 1 to 5.

7. Motorcycle or motor-operated bicycle according to Claim 6, **characterized in that** a ride level regulation means (50) of the chassis, which ride level regulation means (50) can be operated by a user, is provided, by way of which ride level regulation means (50) the hydraulic loading of the hydraulic actuator (30) can be set in a manner which is dependent on the loading state of the motorcycle, in such a way that a desired chassis level or a desired riding position can be set.

8. Motorcycle or motor-operated bicycle according to Claim 6 or 7, **characterized in that**, furthermore, a pressure sensor system (60) and a pressure display (61) which is connected to the pressure sensor system (60) are provided, by way of which pressure display (61) the hydraulic loading and/or the pressure which is set by way of the respective loading and dynamic riding situation of the motorcycle in the air spring unit (20) are/is displayed or can be displayed.

9. Motorcycle or motor-operated bicycle according to Claim 6, 7 or 8, **characterized in that**, furthermore, an electric adjusting damper is provided in order to set the vibration behaviour of the spring and damping arrangement (1).

10. Motorcycle or motor-operated bicycle according to one of Claims 6 to 9, **characterized in that**, furthermore, a stop or a tension stop spring is connected to the air spring unit (20), in order to limit the spring travels and/or the extension force of the air spring unit (20) in the case of breaking manoeuvres.

## Revendications

1. Agencement de ressort et d'amortissement (1) destiné à régler la constante de rappel et la position de conduite d'une motocyclette, comprenant un montage série formé dans l'ordre par au moins un ressort cylindrique (10), une suspension pneumatique (20) et un actionneur hydraulique (30), dans lequel la constante de rappel de la suspension pneumatique varie en fonction d'une force F agissant de l'extérieur sur l'agencement de ressort et d'amortissement (1), dans lequel la variation de position de conduite qui en résulte est compensée au moyen de la charge hydraulique de l'actionneur hydraulique (30), et une position de conduite définie peut ainsi être réglée ou maintenue.

2. Agencement de ressort et d'amortissement (1) destiné à une motocyclette selon la revendication 1, **caractérisé en ce qu'**un moyen (40) est prévu qui permet de faire varier la charge hydraulique de l'actionneur hydraulique (30).

3. Agencement de ressort et d'amortissement (1) selon la revendication 1 ou 2, **caractérisé en ce qu'**entre la suspension pneumatique (20) et l'actionneur hydraulique (30), un piston séparateur (31) mobile est disposé dont la position de piston relative permet de régler le volume d'air de la suspension pneumatique (20).

4. Agencement de ressort et d'amortissement (1) selon l'une quelconque des revendications précédentes, **caractérisé en ce que** la charge hydraulique de l'actionneur hydraulique (30) est effectuée au moyen d'un dispositif de réglage (41) mécanique ou électromécanique.

5. Agencement de ressort et d'amortissement (1) selon l'une quelconque des revendications précédentes, **caractérisé en ce que** la suspension pneumatique (20) présente un raccord (21) pour l'air ou un milieu gazeux afin de faire varier la pression de remplissage statique, et donc la constante de rappel de la suspension pneumatique, en faisant entrer ou sortir l'air ou le milieu gazeux.

6. Motocyclette ou deux-roues à moteur, comprenant un agencement de ressort et d'amortissement (1) selon l'une quelconque des revendications précédentes 1 à 5.

7. Motocyclette ou deux-roues à moteur selon la revendication 6, caractérisé(e) en ce qu'une régulation de niveau (50) du châssis, pouvant être commandée par un utilisateur, est prévue qui permet de régler la charge hydraulique de l'actionneur hydraulique (30) en fonction de l'état de charge de la motocyclette de telle sorte qu'un niveau de châssis souhaité ou une position de conduite souhaitée peut être réglé(e).

8. Motocyclette ou deux-roues à moteur selon la revendication 6 ou 7, caractérisé(e) en ce qu'en outre, un système de capteur de pression (60) est prévu et un affichage de pression (61) relié au système de capteur de pression (60) est prévu qui affiche ou permet d'afficher la charge hydraulique et/ou la pression dans la suspension pneumatique (20) créée par la charge respective et la situation de conduite dynamique de la motocyclette.

9. Motocyclette ou deux-roues à moteur selon la revendication 6, 7 ou 8, caractérisé (e) en ce qu'en outre un amortisseur de réglage électrique est prévu pour le réglage du comportement vibratoire de l'agencement de ressort et d'amortissement (1).

10. Motocyclette ou deux-roues à moteur selon l'une quelconque des revendications 6 à 9, caractérisé(e) en ce qu'en outre une butée ou un ressort de traction de butée est relié(e) à la suspension pneumatique (20) pour limiter les débattements et/ou la force d'extension de la suspension pneumatique (20) lors des manœuvres de freinage.
